# EUROPEAN PATENT APPLICATION

(11) **EP 3 952 155 A1**
(43) Date of publication of application: **09.02.2022**
(21) Application number: 20779579.0
(22) Date of filing: 26.03.2020
(51) Int. Cl.: H04L 1/00

(54) **TRANSPORT BLOCK SIZE DETERMINATION METHOD AND COMMUNICATION DEVICE**

(30) Priority: 28.03.2019 CN 201910245826
(71) Applicant: VIVO MOBILE COMMUNICATION CO., LTD., Dongguan, Guangdong 523860 (CN)
(72) Inventor: LU, Zhi, Dongguan, Guangdong 523860 (CN); SHEN, Xiaodong, Dongguan, Guangdong 523860 (CN); LI, Na, Dongguan, Guangdong 523860 (CN); CHEN, Xiaohang, Dongguan, Guangdong 523860 (CN); PAN, Xueming, Dongguan, Guangdong 523860 (CN)
(74) Representative: Chimini, Francesco
(86) International application number: PCT/CN2020/081307
(87) International publication number: WO 2020/192718

(57) **Abstract**

Embodiments of the present disclosure provide a transport block size determining method and a communications device. The method includes: determining a duration of a first transmission in N nominal transmissions, where the first transmission is an actual transmission corresponding to a first nominal transmission or a second nominal transmission, and N is an integer greater than or equal to 1; and determining a TBS based on PRBs within the duration.

## Description

### CROSS-REFERENCE TO RELATED APPLICATION

This application claims priority to Chinese Patent Application No. 201910245826. 7, filed on March 28, 2019 in China, which is incorporated herein by reference in its entirety.

### TECHNICAL FIELD

The present disclosure relates to the field of communications technologies, and in particular, to a transport block size (Transport Block Size, TBS) determining method and a communications device.

### BACKGROUND

Compared with a related mobile communications system, a future mobile communications system (for example, a 5G mobile communications system) can adapt to more diversified scenarios and service requirements. For example, main scenarios of the future mobile communications system may include enhanced mobile broadband (Enhanced Mobile Broadband, eMBB), massive machine type communication (Massive Machine Type Communication, mMTC), and ultra-reliable and low latency communications (Ultra Reliable and Low Latency Communications, URLLC). In addition, the future mobile communications system needs to support repetitive transmission at a symbol level such as a physical uplink shared channel (Physical uplink shared channel, PUSCH) and a physical downlink shared channel (Physical downlink shared channel, PDSCH), to meet an ultra-reliable and low latency scenario. However, a TBS is determined based on physical resource blocks (Physical Resource Block, PRB) within duration of each transmission, and the duration of each transmission is required to be the same. Transmissions with different duration may exist in repetitive transmission processes (for example, a PUSCH repetitive transmission process or a PDSCH repetitive transmission process) in some scenarios (for example, a URLLC scenario). In this case, a TBS determining manner cannot be applied to repetitive transmissions with different duration. It can be learned that the TBS determining method is applied to few application scenarios.

### SUMMARY

Embodiments of the present disclosure provide a TBS determining method and a communications device, to resolve a problem that the TBS determining method is applied to few application scenarios.

According to a first aspect, some embodiments of the present disclosure provide a TBS determining method, including:
determining a duration of a first transmission in N nominal transmissions, where the first transmission is an actual transmission corresponding to a first nominal transmission or a second nominal transmission, and N is an integer greater than or equal to 1; and
determining a TBS based on PRBs within the duration.

According to a second aspect, some embodiments of the present disclosure provide a communications device, including:
a first determining module, configured to determine a duration of a first transmission in N nominal transmissions, where the first transmission is an actual transmission corresponding to a first nominal transmission or a second nominal transmission, and N is an integer greater than or equal to 1; and
a second determining module, configured to determine a TBS based on PRBs within the duration.

According to a third aspect, some embodiments of the present disclosure provide a communications device, including a memory, a processor, and a program that is stored in the memory and that is executable on the processor, where when the program is executed by the processor, the steps of the TBS determining method provided in some embodiments of the present disclosure are implemented.

According to a fourth aspect, some embodiments of the present disclosure provide a computer-readable storage medium, where the computer-readable storage medium stores a computer program, and when the computer program is executed by a processor, the steps of the TBS determining method provided in some embodiments of the present disclosure are implemented.

In some embodiments of the present disclosure, the TBS determining method can be applied to more application scenarios.

### BRIEF DESCRIPTION OF DRAWINGS

FIG. 1 is a structural diagram of a network system applicable to some embodiments of the present disclosure;
FIG. 2 is a flowchart of a TBS determining method according to some embodiments of the present disclosure;
FIG. 3 is a schematic diagram of transmission according to some embodiments of the present disclosure;
FIG. 4 is another schematic diagram of transmission according to some embodiments of the present disclosure;
FIG. 5 is another schematic diagram of transmission according to some embodiments of the present disclosure;
FIG. 6 is another schematic diagram of transmission according to some embodiments of the present disclosure;
FIG. 7 is another schematic diagram of transmission according to some embodiments of the present disclosure;
FIG. 8 is a structural diagram of a communications device according to some embodiments of the present disclosure;
FIG. 9 is another structural diagram of a communications device according to some embodiments of the present disclosure; and
FIG. 10 is another structural diagram of a communications device according to some embodiments of the present disclosure.

### DESCRIPTION OF EMBODIMENTS

The following clearly and completely describes the technical solutions in the embodiments of the present disclosure with reference to the accompanying drawings in the embodiments of the present disclosure. Apparently, the described embodiments are some but not all of the embodiments of the present disclosure. All other embodiments obtained by a person of ordinary skill in the art based on the embodiments of the present disclosure without creative efforts shall fall within the protection scope of the present disclosure.

The term "include" and any other variants in the specification and claims of this application mean to cover the non-exclusive inclusion, for example, a process, method, system, product, or device that includes a list of steps or units is not necessarily limited to those steps or units, but may include other steps or units not expressly listed or inherent to such a process, method, product, or device. In addition, in the specification and claims, "and/or" is used to indicate at least one of connected objects. For example, A and/or B represents the following three cases: Only A is included, only B is included, and both A and B exist.

In the embodiments of the present disclosure, the word such as "example" or "example" is used to represent giving an example, an illustration, or a description. Any embodiment or design scheme described as "example" or "for example" in the embodiments of the present disclosure should not be construed as being more preferred or advantageous than other embodiments or design schemes. To be precise, the use of the term such as "example" or "for example" is intended to present a related concept in a specific manner.

The embodiments of the present disclosure are described below with reference to the accompanying drawings. A TBS determining method and a communications device provided in the embodiments of the present disclosure may be applied to a wireless communications system. The wireless communications system may be a 5G system, an evolved Long Term Evolution (Evolved Long Term Evolution, eLTE) system, a Long Term Evolution (Long Term Evolution, LTE) system, a subsequent evolved communications system, or the like.

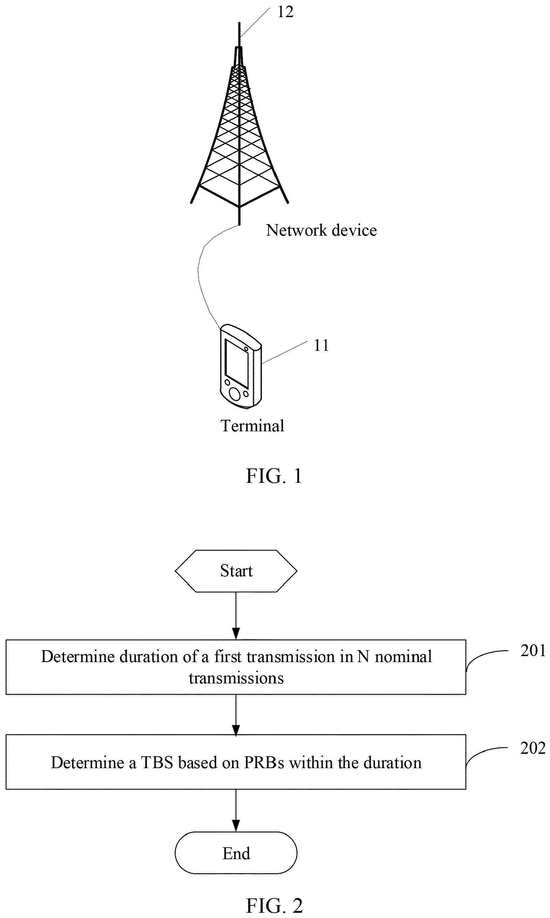

Referring to FIG. 1, FIG. 1 is a structural diagram of a network system that may be applied to some embodiments of the present disclosure. As shown in FIG. 1, the network system includes: a terminal 11 and a network device 12, where the terminal 11 may be user equipment (User Equipment, UE) or other terminal side devices, for example: a mobile phone, a tablet personal computer (Tablet Personal Computer), a laptop computer (Laptop Computer), a personal digital assistant (personal digital assistant, PDA), a mobile Internet device (Mobile Internet Device, MID), a wearable device (Wearable Device) or a robot. It should be noted that a specific type of the terminal 11 is not limited in some embodiments of the present disclosure. The above network device 12 may be a 4G base station, or a 5G base station, or a base station of a later version, or a station in other communication systems, or be called as a node B, an evolved node B, or a transmission reception point (Transmission Reception Point, TRP), or an access point (Access Point, AP), or other words in the field. As long as the same technical effect is achieved, the network device is not limited to specific technical words. In addition, the above network device 12 may be a master node (Master Node, MN) or a secondary node (Secondary Node, SN). It should be noted that in some embodiments of the present disclosure, only the 5G base station is used as an example, but a specific type of the network device is not limited.

Referring to FIG. 2, FIG. 2 is a flowchart of a TBS determining method according to some embodiments of the present disclosure. As shown in FIG. 2, the method includes the following steps.

Step 201: Determine a duration of a first transmission in N nominal transmissions (nominal transmission), where the first transmission is an actual transmission corresponding to a first nominal transmission or a second nominal transmission, and N is an integer greater than or equal to 1.

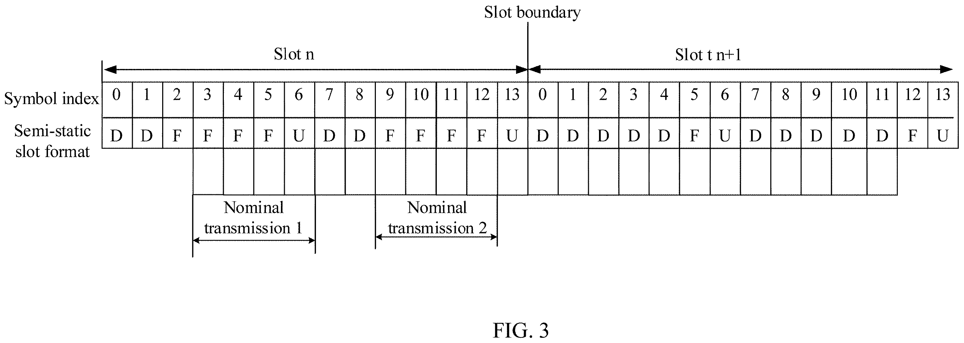

In some embodiments of the present disclosure, a nominal transmission may be a PUSCH or PDSCH nominal transmission, and the nominal transmission may be an initial transmission or a retransmission. For simplicity, each nominal transmission may also be referred to as a repetitive transmission. For example, each nominal transmission occupies time domain resources of a same size (for example, including a plurality of consecutive symbols), which may be referred to as time domain duration (duration). These time domain resources are used for PUSCH or PDSCH transmission. As shown in FIG. 3, if a repetitive transmission does not span a slot boundary, an uplink-downlink switching point, or symbols with conflicting transmission directions, each repetitive transmission may be referred to as one nominal transmission. It should be noted that in some embodiments of the present disclosure, a PUSCH repetitive transmission is used as an example for description. For a PDSCH repetitive transmission, refer to the PUSCH repetitive transmission.

In addition, the N nominal transmissions may be determined based on a first message. Further, the N nominal transmissions may be N transmission opportunities determined based on the first message. The nominal transmission may be a nominal transmission determined based on the first message, and the transmission may be understood as one transmission opportunity. In a transmission process, not all nominal transmissions are actual transmissions. For example, some nominal transmissions are actual transmissions, and other nominal transmissions are divided into a plurality of actual transmissions.

The first message may be an indication message or a notification message sent by a network device, for example, a DCI indication or an RRC indication. In addition, the first message may be used to notify a quantity of nominal transmissions, so that the N nominal transmissions can be determined based on a time domain resource of the first nominal transmission and the quantity. Because some nominal transmissions may be divided into a plurality of actual transmissions, a quantity of nominal transmissions indicated or notified by a network may not be equal to a quantity of actual transmissions.

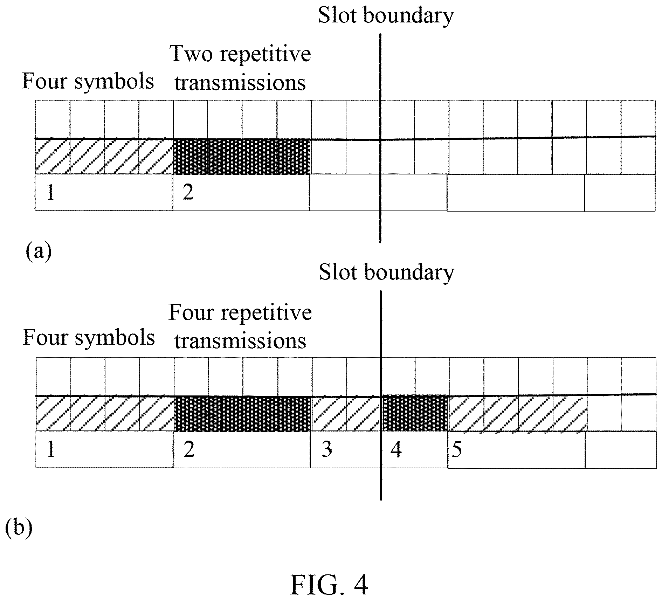

For example, in (a) in FIG. 4, each repetitive transmission lasts four symbols, and a quantity of nominal transmissions is 2. All nominal transmissions do not span a slot boundary, an uplink-downlink switching point (UL-DL switching point), or symbols with conflicting transmission directions. Therefore, a quantity of actual transmissions is 2.

In addition, in (b) in FIG. 4, each repetitive transmission lasts four symbols, and a quantity of nominal transmissions is 4. When a nominal transmission spans a slot boundary, an uplink-downlink switching point, or symbols with conflicting transmission directions, one nominal transmission is divided into two actual transmissions. In this way, a quantity of actual transmissions is 5.

It should be noted that, in some embodiments of the present disclosure, a size of a time domain resource occupied by each nominal transmission may be preconfigured, notified by the network, or defined in a protocol. This is not limited thereto.

In addition, the first nominal transmission may be any nominal transmission in the N nominal transmissions. In this case, the TBS may be determined based on PRBs within the duration of a nominal transmission. Optionally, the first nominal transmission is a nominal transmission that is not divided, or in other words, the nominal transmission is equivalent to an actual transmission. The second nominal transmission may be a nominal transmission that is divided into a plurality of actual transmissions, or a set of a plurality of divided nominal transmissions.

It should be noted that, in some embodiments of the present disclosure, that a nominal transmission is divided into a plurality of actual transmissions may be that a time resource included in the nominal transmission is divided into a plurality of available transmission resources, so that an actual transmission is performed on the plurality of available transmission resources. The available transmission resource may be: When a quantity of symbols of available consecutive time domain resources is greater than or equal to x, the consecutive time domain resources are available transmission resources; or when a quantity of symbols of available consecutive time domain resources is less than x, the consecutive time domain resources are unavailable transmission resources. The foregoing x is a positive integer, for example, 2.

The following uses an example in which a time domain resource is a symbol.

For a to-be-performed PUSCH transmission, it is assumed that a minimum transmission length thereof is allowed to be x symbols (for example, 2 symbols), that is, the transmission cannot be performed if the transmission length is less than the x symbols. When a quantity of consecutive symbols available for a to-be-transmitted PUSCH is less than the x symbols, these symbols are referred to as unavailable transmission symbols. When a quantity of consecutive symbols available for a to-be-transmitted PUSCH is greater than or equal to the x symbols, these symbols are referred to as available transmission symbols.

In addition, the duration of the first transmission may be a duration for a data transmission of the first transmission. For example, the first transmission includes four symbols, one symbol is used to transmit a demodulation reference signal (Demodulation Reference Signal, DMRS), and three symbols are used to transmit data. Therefore, the duration is four symbols.

For ease of description, in some embodiments of the present disclosure, it is assumed that a DMRS symbol is not used to transmit data, but some embodiments of the present disclosure are also applied to a case in which the DMRS symbol is used to transmit data. For example, if the first transmission includes four symbols, and one symbol is used to transmit a DMRS, the four symbols are used to transmit data. The first symbol is used to transmit both the DMRS and the data, and the duration is still four symbols.

Step 202: Determine a TBS based on PRBs within the duration.

In step 202, the TBS may be calculated based on the PRBs within the duration. A manner of calculating the TBS is not limited in some embodiments of the present disclosure. For example, reference may be made to the manner that is of calculating the TBS based on the PRBs and that is defined in a protocol.

In some embodiments of the present disclosure, because the duration is the duration of the actual transmission corresponding to the first nominal transmission or the second nominal transmission, the TBS is determined based on the PRBs within the duration, so that the TBS can be applied to repetitive transmissions with different durations, so as to be applied to more application scenarios (for example, a URLLC scenario), and transmission reliability can be further improved. In this way, a communications system can support repetitive transmissions with different durations (for example, a PUSCH repetitive transmission or a PDSCH repetitive transmission), thereby improving a transmission effect of the communications system.

It should be noted that the TBS determining method provided in some embodiments of the present disclosure can be applied to a communications device such as a terminal or a network device.

In an optional implementation, the TBS is determined based on the PRBs within the duration, and the method further includes:
performing a repetitive transmission based on the TBS.

The performing a transmission based on the TBS may be: A size of information transmitted on each transport block (Transport Block, TB) in each actual transmission process of the repetitive transmission is the foregoing TBS, for example, a quantity of transmitted information bits is the foregoing TBS.

In addition, the performing a transmission based on the TBS may be performing a PUSCH repetitive transmission or a PDSCH repetitive transmission. In addition, the performing a transmission based on the TBS may be performing data receiving based on the TBS or performing data sending based on the TBS.

For example, for the PUSCH repetitive transmission, the performing a transmission based on the TBS may be that the terminal repeatedly sends a PUSCH to the network device based on the TBS; or for the PUSCH repetitive transmission, the performing a transmission based on the TBS may be that the network device receives, based on the TBS, the PUSCH repeatedly sent by the terminal.

For example, for the PDSCH repetitive transmission, the performing a transmission based on the TBS may be that the network device repeatedly sends a PDSCH to the terminal based on the TBS; or for the PDSCH repetitive transmission, the performing a transmission based on the TBS may be that the terminal receives, based on the TBS, the PDSCH repeatedly sent by the network device.

In this implementation, the repetitive transmission is performed based on the TBS. In this way, durations of different actual transmissions may be different, so that the repetitive transmission (for example, a PUSCH repetitive transmission or a PDSCH repetitive transmission) can better adapt to a flexible change of a slot format, thereby improving reliability of the repetitive transmission (for example, a PUSCH transmission or a PDSCH transmission).

It should be noted that in some embodiments of the present disclosure, an actual transmission may be an actual transmission performed based on the foregoing TBS. In addition, the duration of the first transmission in step 201 is a duration predetermined before an actual transmission. For example, before the actual transmission corresponding to the second nominal transmission, the duration of the actual transmission is predetermined.

In an optional implementation, in the N nominal transmissions, a nominal transmission that does not span a slot boundary is one actual transmission, and a nominal transmission that spans the slot boundary is divided into a plurality of actual transmissions; or
in the N nominal transmissions, a nominal transmission that does not span an uplink-downlink switching point is one actual transmission, and a nominal transmission that spans the uplink-downlink switching point is divided into a plurality of actual transmission; or
in the N nominal transmissions, a nominal transmission that does not span symbols with conflicting transmission directions is one actual transmission, and a nominal transmission that spans the symbols with the conflicting transmission directions is divided into a plurality of actual transmissions.

The uplink-downlink switching point may be a time point for switching between a downlink symbol and an uplink symbol, and the symbols with the conflicting transmission directions may be an uplink or downlink symbol that conflicts with transmission.

That the nominal transmission is an actual transmission may be that inn an actual transmission process, one repetitive transmission is performed on a resource of the nominal transmission. For example, if a nominal transmission occupies four symbols, one repetitive transmission is performed on the four symbols.

That the nominal transmission is divided into a plurality of actual transmissions may be that a resource occupied by the nominal transmission is divided into a plurality of available transmission resources, and the plurality of available transmission resources are separately used for a plurality of transmissions, to implement a repetitive transmission corresponding to the nominal transmission.

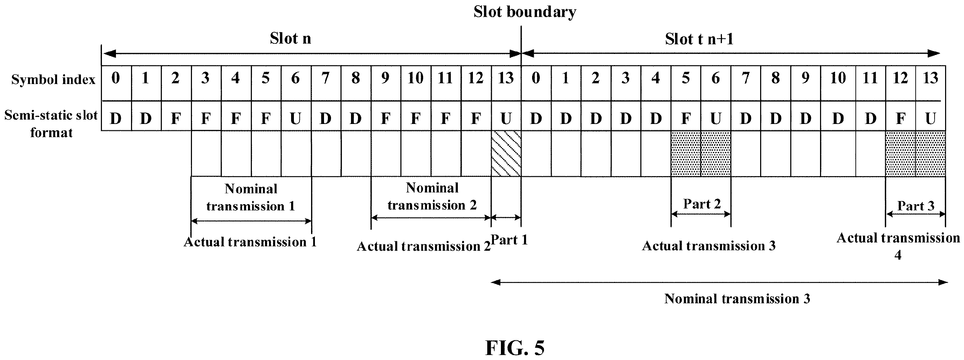

As shown in FIG. 5, a nominal transmission 1 and a nominal transmission 2 does not span a slot boundary (Slot boundary), so that the nominal transmission 1 and the nominal transmission 2 are respectively an actual transmission 1 and an actual transmission 2. Anominal transmission 3 spans the slot boundary, and includes three to-be-transmitted parts, where a part 1 has only one symbol and is an unavailable transmission resource, and a part 2 and a part 3 each have two symbols and are available transmission resources, so that actual transmissions are separately performed in the part 2 and the part 3.

In this implementation, a nominal transmission that spans a slot boundary, an uplink-downlink switching point, and symbols with conflicting transmission directions may be determined as an actual transmission based on a resource occupied by the nominal transmission, and a nominal transmission that does not span the slot boundary, the uplink-downlink switching point, and the symbols with the conflicting transmission directions is divided into a plurality of actual transmissions, thereby improving transmission reliability. In addition, the nominal transmission that spans the symbols with the conflicting transmission directions is divided into a plurality of actual transmissions, and the symbols with the conflicting transmission directions may be skipped, thereby reducing a latency.

In an optional implementation, the first nominal transmission is:
a nominal transmission that is first performed in the N nominal transmissions.

The nominal transmission that is first performed may be the first nominal transmission that is performed in the N nominal transmissions. In addition, the nominal transmission that is first performed may also be referred to as a nominal transmission that is performed for the first time.

In this implementation, the TBS may be determined based on PRBs within the duration of the nominal transmission that is performed for the first time. As shown in FIG. 5, a quantity of nominal transmissions is 3, and a nominal transmission 1 and a nominal transmission 2 are respectively an actual transmission 1 and an actual transmission 2. Anominal transmission 3 is divided into three to-be-transmitted parts, where the first part is an unavailable transmission, and there are two actual transmissions (an actual transmission 3 and an actual transmission 4) for the nominal transmission 3. The TBS is determined based on the nominal transmission 1. In this example, the nominal transmission 1 has one symbol used for a DMRS and three symbols used for data. The TBS is determined based on the three data symbols.

In this implementation, the TBS may be determined based on the PRBs within the duration of the nominal transmission that is first performed in the N nominal transmissions, thereby reducing complexity.

In addition, in this implementation, further, the N nominal transmissions may include a first actual transmission, and the first actual transmission is one actual transmission of a divided nominal transmission or a set of a plurality of actual transmissions of a divided nominal transmission.

There are two transmission manners for each actual transmission corresponding to the divided nominal transmission.

In one transmission manner, for each actual transmission, a transmission is performed by puncturing a nominal transmission. In this case, one TB may be sent in each actual transmission. For example, in an actual transmission 3 and an actual transmission 4 in FIG. 5, only one symbol can be used to transmit data. In this case, two data symbols of a nominal transmission may be punctured, and then a remaining part, that is, one data symbol, is transmitted.

In another transmission manner, for a set of actual transmissions, a transmission is performed by puncturing a nominal transmission. In this case, one TB is sent in a plurality of actual transmissions obtained through division. For example, in an actual transmission 3 and an actual transmission 4 in FIG. 5, two symbols can be used to transmit data. In this case, one data symbol of a nominal transmission may be punctured, and then remaining parts, that is, two data symbols, are sent in two actual transmissions.

In an optional implementation, the first nominal transmission is:
a nominal transmission that first indicates a first redundancy version (Redundancy Version, RV) in the N nominal transmissions.

The first RV may be preconfigured, defined in a protocol, or indicated by the network. Optionally, the first RV is an RV0. Certainly, this is not limited.

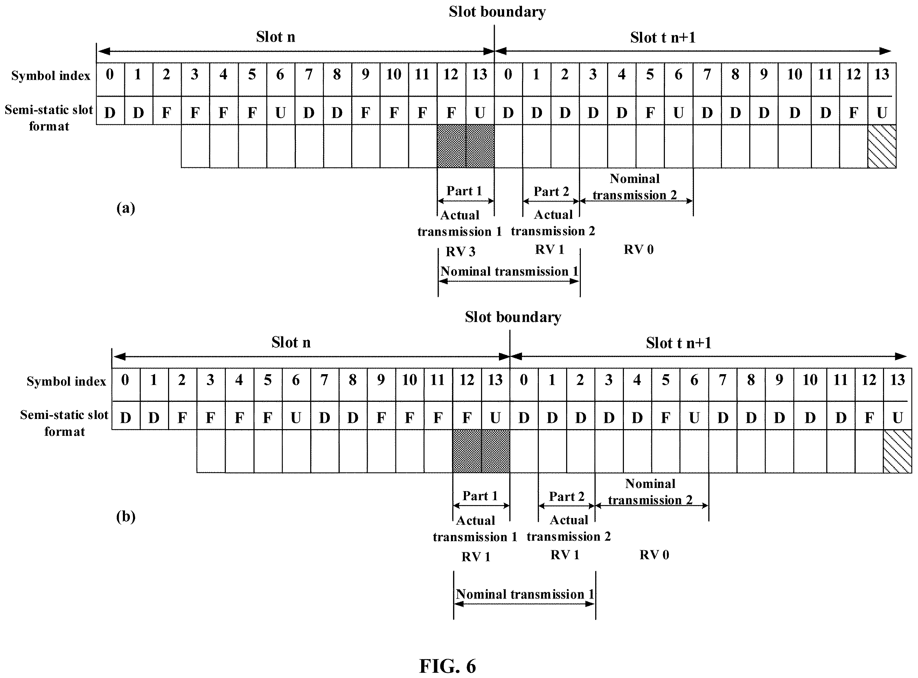

In this implementation, the TBS may be determined based on PRBs within the duration of a nominal transmission that first indicates an RV version (for example, the RV0). As shown in FIG. 6, because a URLLC service may randomly arrive at any moment, if the first nominal transmission spans a slot boundary, the first nominal transmission may be divided into a plurality of parts. An actual transmission or a nominal transmission may use a different redundancy version. Because the first nominal transmission is divided into a plurality of actual transmissions, a quantity of time domain symbols of these actual transmissions may be far less than that of a nominal transmission that is not divided, resulting in a relatively high code rate and poor transmission reliability. The network may instruct these actual transmissions to use a redundancy version that is not self-decoded, thereby reducing discarding of system bits. Thus, the TBS may be determined based on a nominal transmission of a network-indicated RV version (for example, the RV0) to improve transmission reliability. In FIG. 6, a nominal transmission 2 has one symbol used for a DMRS and three symbols used for data, and the RV0 is used. The TBS is determined based on the nominal transmission 2, that is, the three data symbols.

In this implementation, further, the N nominal transmissions may include a first actual transmission, and the first actual transmission is one actual transmission of a divided nominal transmission or a set of a plurality of actual transmissions of a divided nominal transmission.

Similarly, in this implementation, there are two transmission manners for each actual transmission corresponding to the divided nominal transmission.

In one transmission manner, for each actual transmission, a quantity of transmission symbols thereof is less than that of a nominal transmission, and a transmission is performed by puncturing a nominal transmission. In this case, one TB is sent in each actual transmission. For example, in (a) in FIG. 6, a nominal transmission 1 is divided into two actual transmissions: an actual transmission 1 and an actual transmission 2, and only one symbol can be used to transmit data. In this case, two symbols of a redundancy version 3 of the nominal transmission and two symbols of a redundancy version 1 of the nominal transmission may be separately punctured, and then a remaining part is transmitted, that is, one data symbol is transmitted.

In another transmission manner, for a set of actual transmissions, a sum of a quantity of data transmission symbols thereof may be less than a quantity of data symbols of a nominal transmission, and therefore a transmission may be performed by puncturing a nominal transmission. In this case, one TB is sent in a plurality of actual transmissions obtained through division. For example, an actual transmission 1 and an actual transmission 2 in (b) in FIG. 6 use a same RV version, and two symbols can be used to transmit data. In this case, one symbol of an RV1 may be transmitted by puncturing a nominal transmission, and then remaining parts, that is, two data symbols, are sent in two actual transmissions.

In an optional implementation, the first nominal transmission is:
a nominal transmission that is not divided in the N nominal transmissions.

The nominal transmission that is not divided may be any nominal transmission that is not divided in the N nominal transmissions. The nominal transmission that is not divided is equivalent to an actual transmission, that is, a complete repetitive transmission. Therefore, in this implementation, the TBS may be determined based on PRBs within the duration of the complete repetitive transmission, so that resource utilization of the repetitive transmission is improved when the repetitive transmission is performed based on the TBS. In addition, in this implementation, each nominal transmission that is not divided may occupy a same time-frequency domain resource, for example, a same quantity of symbols.

In this implementation, a TBS is determined based on PRBs within the duration of a nominal transmission that is not divided. As shown in FIG. 5, a nominal transmission that is not divided is a complete repetitive transmission. Nominal transmissions that are not divided are a nominal transmission 1 and a nominal transmission 2, one symbol is used for a DMRS, and three symbols are used for data. The TBS is determined based on the three data symbols.

In this implementation, further, the N nominal transmissions may include a first actual transmission, and the first actual transmission is one actual transmission of a divided nominal transmission or a set of a plurality of actual transmissions of a divided nominal transmission.

Similarly, there are two transmission manners for each actual transmission corresponding to the divided nominal transmission.

In one transmission manner, for each actual transmission, a quantity of transmission symbols thereof is less than that of a nominal transmission, and therefore a transmission is performed by puncturing a nominal transmission. In this case, one TB may be sent in each actual transmission.

In another transmission manner, for a set of actual transmissions, a sum of a quantity of data transmission symbols thereof may be less than a quantity of data symbols of a nominal transmission, and therefore a transmission may be performed by puncturing a nominal transmission. In this case, one TB may be sent in a plurality of actual transmissions obtained through division.

In an optional implementation, the actual transmission corresponding to the second nominal transmission is:
a set of a plurality of actual transmissions obtained by dividing the second nominal transmission; or
an actual transmission with most symbols in a plurality of actual transmissions obtained by dividing the second nominal transmission; or
an actual transmission with least symbols in a plurality of actual transmissions obtained by dividing the second nominal transmission.

In this implementation, the duration may be the duration of the set of the plurality of actual transmissions obtained by dividing the second nominal transmission, or the duration may be the duration of the actual transmission with most or least symbols in the plurality of actual transmissions obtained by dividing the second nominal transmission, so that a corresponding method can be flexibly selected based on an actual situation to determine the TBS, thereby improving reliability of a PUSCH repetitive transmission.

Optionally, in a case that the actual transmission corresponding to the second nominal transmission is the set of the plurality of actual transmissions, one TB is transmitted in the set of the plurality of actual transmissions; or
in a case that the actual transmission corresponding to the second nominal transmission is the actual transmission with most symbols in the plurality of actual transmissions, one TB is transmitted in each actual transmission; or
in a case that the actual transmission corresponding to the second nominal transmission is the actual transmission with least symbols in the plurality of actual transmissions, one TB is transmitted in each actual transmission.

In this implementation, a plurality of repetitive transmission solutions can be supported to adapt to different scenarios or service requirements.

In one solution, the second nominal transmission may be:
a nominal transmission that is divided into most actual transmissions in the N nominal transmissions.

The nominal transmission that is divided into the maximum quantity of actual transmissions may be: If at least one nominal transmission is divided in the N nominal transmissions, a nominal transmission corresponding to most actual transmissions is selected from the at least one nominal transmission. If no nominal transmission is divided, most actual transmissions in a divided nominal transmission is 0, and any nominal transmission is selected to determine the TBS.

In this solution, optionally, the nominal transmission that is divided into the maximum quantity of actual transmissions is selected, and the TBS is determined based on PRBs of the duration of a set of all actual transmission. In this case, one TB may be sent in the set of all actual transmissions. As shown in FIG. 5, a nominal transmission 3 is divided into three to-be-transmitted parts. In a repetitive transmission, a nominal transmission with most segments is the nominal transmission 3, two symbols are used for a DMRS, and two symbols are used for data (another to-be-transmitted part is discarded). It is assumed that the TBS is determined based on the two data symbols. For a nominal transmission that is not divided and another actual transmission obtained through division, a corresponding quantity of time domain transmission symbols may be matched in a rate matching manner for transmission.

Certainly, in a case that the second nominal transmission is the nominal transmission corresponding to the maximum quantity of actual transmissions, the actual transmission corresponding to the second nominal transmission may be another two cases described above, that is, the actual transmission with most or least symbols described above.

For example, the nominal transmission that is divided into the maximum quantity of actual transmissions is selected, and the TBS is determined based on PRBs within duration of the actual transmission with least symbols. Alternatively, the nominal transmission that is divided into the maximum quantity of actual transmissions is selected, and the TBS is determined based on PRBs within duration of the actual transmission with most symbols.

Similarly, if a quantity of symbols of an actual transmission or a nominal transmission is greater than a quantity of symbols of an actual transmission for determining a TBS, a transmission may be performed through rate matching. If a quantity of symbols of an actual transmission is less than a quantity of symbols of an actual transmission for determining a TBS, a transmission may be performed through rate puncturing.

In another solution, the second nominal transmission may be:
a set of divided nominal transmissions in the N nominal transmissions.

In this solution, the second nominal transmission may be the set of divided nominal transmissions. For example, if M nominal transmissions in the N nominal transmissions are divided into a plurality of actual transmissions, the second nominal transmission is a set of the M nominal transmissions.

In this solution, optionally, an actual transmission obtained by dividing a nominal transmission is selected, and the TBS is determined based on PRBs within the duration of the actual transmission with most symbols. In this case, one TB may be sent in each actual transmission. As shown in FIG. 5, a nominal transmission 3 is divided into three parts. The nominal transmission 3 is divided into two actual transmissions (an actual transmission 3 and an actual transmission 4), and both the actual transmission 3 and the actual transmission 4 have most symbols. The TBS is determined based on the actual transmission 3 or the actual transmission 4, that is, it is assumed that the TBS is determined based on one data symbol. In addition, for a nominal transmission that is not divided, a transmission may be performed through rate matching after the determined TBS is encoded, and for an actual transmission whose quantity of symbols is less than that of the determined actual transmission, a transmission may be performed by matching corresponding symbols through puncturing.

Certainly, in a case that the second nominal transmission is the set of divided nominal transmissions in the N nominal transmissions, the actual transmission corresponding to the second nominal transmission may be another two cases described above, that is, the solution of the set of the plurality of actual transmissions or the actual transmission with least symbols described above.

In an optional implementation, in a case that the N nominal transmissions span a slot boundary, an uplink-downlink switching point, or symbols with conflicting transmission directions, the actual transmission corresponding to the second nominal transmission is:
an actual transmission of the second nominal transmission in one time domain resource; or
a set of actual transmissions of the second nominal transmission in a plurality of time domain resources, where
the second nominal transmission is a set of the N nominal transmissions.

That the N nominal transmissions span the slot boundary, the uplink-downlink switching point, or the symbols with the conflicting transmission directions may be that a resource set occupied by the N nominal transmissions spans the slot boundary, the uplink-downlink switching point, or the symbols with the conflicting transmission directions.

Further, in a case that the N nominal transmissions do not span the slot boundary, the uplink-downlink switching point, or the symbols with the conflicting transmission directions, the first nominal transmission may be any one of the N nominal transmissions. In other words, the TBS is determined based on PRBs within a duration of any nominal transmission.

It should be noted that, in this implementation, for a repetitive transmission, different division manners may be used:

In a division manner, when total transmission resources (L^{∗}K) are determined based on a time domain resource allocation (length L) and a quantity of repetition times (K), an actual transmission may be performed within a UL time period (for example, a UL Period) when the total resources span the slot boundary (for example, a slot boundary), the uplink-downlink switching point, or the symbols with the conflicting transmission directions.

In another division manner, when the total resources do not span the slot boundary (for example, the slot boundary), the uplink-downlink switching point, or the symbols with the conflicting transmission directions, a transmission is performed within a UL time period (for example, a UL Period) based on a quantity of nominal transmissions.

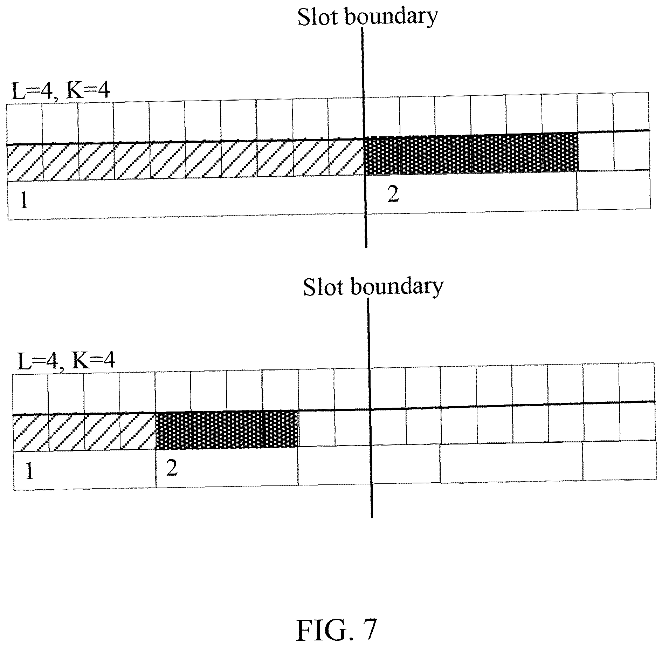

As shown in FIG. 7, when each indicated repetitive transmission lasts four symbols, a quantity of nominal transmissions is 4, and the slot boundary is spanned, the total resources are 16 symbols, and a quantity of actual transmissions is 2, where a quantity of symbols of an actual transmission 1 is 10, and a quantity of symbols of an actual transmission 2 is 6.

As shown in FIG. 7, when each indicated repetitive transmission lasts four symbols, a quantity of nominal transmissions is 2, and the slot boundary is not spanned, a quantity of actual transmissions is 2, where a quantity of symbols of an actual transmission 1 is 4, and a quantity of symbols of an actual transmission 2 is 4.

In the foregoing implementation, because the actual transmission corresponding to the second nominal transmission is an actual transmission of the second nominal transmission in an uplink time period, a transmission in one slot may be considered as one actual transmission. In this way, the TBS may be determined based on PRBs within the duration of an actual transmission of the second nominal transmission in one uplink time period corresponding to least or most symbols.

For example, when the total resources span the slot boundary (for example, the slot boundary), the uplink-downlink switching point, or the symbols with the conflicting transmission directions, the TBS is determined based on a quantity of symbols of a shortest actual transmission, and other actual transmissions may be performed through rate matching; or the TBS is determined based on a quantity of symbols of a longest actual transmission, and other actual transmission may be performed through puncturing.

When the total resources do not span the slot boundary (for example, the slot boundary), the uplink-downlink switching point, or the symbols with the conflicting transmission directions, the TBS is determined based on each nominal transmission. Further, in this manner, one complete TB may be transmitted in each actual transmission.

In addition, the actual transmission corresponding to the second nominal transmission is: a set of actual transmissions of the second nominal transmission in a plurality of uplink time periods, so that when the total resources span the slot boundary (for example, the slot boundary), the uplink-downlink switching point, or the symbols with the conflicting transmission directions, the TBS is determined based on a total quantity of symbols. In this case, one TB is transmitted on all available uplink time domain resources.

In an optional implementation, in some embodiments of the present disclosure, the TBS is determined in the following manner:

Step 1: Determine a length of reference time domain duration based on step 201, where the reference time domain duration is the duration determined in step 201.

Step 2: Calculate a quantity X of available resource units (Resource Element, RE) of a resource block (Resource Block, RB) in the reference time domain duration.

X = (Quantity of REs available to one RB) - (DMRS overheads of one RB) - (Other overheads), where the other overheads herein may include overheads such as a channel state indication reference signal (Channel state indication reference signal, CSI-RS) control resource set (control resource set, CORESET).

Step 3: Determine an intermediate value through quantization, where X may be mapped to a reference value Y (a value range of Y in a protocol may be {6, 12, 18, 42, 72, 108, 144, 156}).

Step 4: Calculate a total quantity of available REs, where *N_RE* =Y ^{∗} Quantity of scheduled PRBs, and the quantity of scheduled PRBs is a quantity of PRBs within the duration determined in step 201.

Step 5: Determine a quantity of information bits, where N_info= *N_RE ·υ·Q_m·R*, *υ* is a quantity of layers, *Q_m* is a modulation order, and *R* is a bit rate.

Step 6: Calculate a TBS based on the N info, where the following rules need to be considered during calculation:
Bytes are aligned;
after a code block is segmented, sizes of code blocks are the same; and
(TBS + cyclic redundancy check (Cyclic Redundancy Check, CRC)) is a factor of a quantity of segmented code blocks ^{∗} a size of a code block.

It should be noted that the foregoing is only an example of determining the TBS. In some embodiments of the present disclosure, a manner of determining the TBS based on the PRBs within the duration is not limited. For example, another manner of calculating the TBS based on the PRBs defined in the protocol may also be used.

In some embodiments of the present disclosure, the TBS determining method can be applied to more application scenarios, and reliability of a repetitive transmission (for example, a PUSCH transmission or a PDSCH transmission) can be further improved.

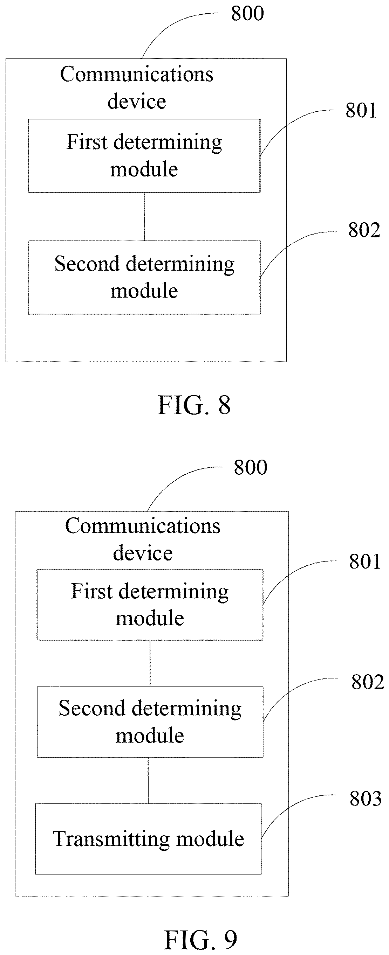

Referring to FIG. 8, FIG. 8 is a structural diagram of a communications device according to some embodiments of the present disclosure. The communications device is a terminal or a network device. As shown in FIG. 8, a communications device 800 includes:
a first determining module 801, configured to determine a duration of a first transmission in N nominal transmissions, where the first transmission is an actual transmission corresponding to a first nominal transmission or a second nominal transmission, and N is an integer greater than or equal to 1; and
a second determining module 802, configured to determine a TBS based on PRBs within the duration.

Optionally, as shown in FIG. 9, the communications device 800 further includes:
a transmission module 803, configured to perform a repetitive transmission based on the TBS.

Optionally, in the N nominal transmissions, a nominal transmission that does not span a slot boundary is one actual transmission, and a nominal transmission that spans the slot boundary is divided into a plurality of actual transmissions; or
in the N nominal transmissions, a nominal transmission that does not span an uplink-downlink switching point is one actual transmission, and a nominal transmission that spans the uplink-downlink switching point is divided into a plurality of actual transmission; or
in the N nominal transmissions, a nominal transmission that does not span symbols with conflicting transmission directions is one actual transmission, and a nominal transmission that spans the symbols with the conflicting transmission directions is divided into a plurality of actual transmissions.

Optionally, the N nominal transmissions are N transmission opportunities determined based on a first message.

Optionally, the first nominal transmission is:
a nominal transmission that is first performed in the N nominal transmissions; or
a nominal transmission that first indicates a first redundancy version RV in the N nominal transmissions; or
a nominal transmission that is not divided in the N nominal transmissions.

Optionally, the N nominal transmissions include a first actual transmission, and the first actual transmission is one actual transmission of a divided nominal transmission or a set of a plurality of actual transmissions of a divided nominal transmission.

Optionally, the actual transmission corresponding to the second nominal transmission is:
a set of a plurality of actual transmissions obtained by dividing the second nominal transmission; or
an actual transmission with most symbols in a plurality of actual transmissions obtained by dividing the second nominal transmission; or
an actual transmission with least symbols in a plurality of actual transmissions obtained by dividing the second nominal transmission.

Optionally, the second nominal transmission is:
a nominal transmission that is divided into most actual transmissions in the N nominal transmissions; or
a set of divided nominal transmissions in the N nominal transmissions.

Optionally, in a case that the actual transmission corresponding to the second nominal transmission is the set of the plurality of actual transmissions, one transport block TB is transmitted in the set of the plurality of actual transmissions; or
in a case that the actual transmission corresponding to the second nominal transmission is the actual transmission with most symbols in the plurality of actual transmissions, one TB is transmitted in each actual transmission; or
in a case that the actual transmission corresponding to the second nominal transmission is the actual transmission with least symbols in the plurality of actual transmissions, one TB is transmitted in each actual transmission.

Optionally, in a case that the N nominal transmissions span a slot boundary, an uplink-downlink switching point, or symbols with conflicting transmission directions, the actual transmission corresponding to the second nominal transmission is:
an actual transmission of the second nominal transmission in one time domain resource; or
a set of actual transmissions of the second nominal transmission in a plurality of time domain resources, where
the second nominal transmission is a set of the N nominal transmissions.

Optionally, in a case that the N nominal transmissions do not span the slot boundary, the uplink-downlink switching point, or the symbols with the conflicting transmission directions, the first nominal transmission is any one of the N nominal transmissions.

The communications device provided in some embodiments of the present disclosure can implement the processes implemented by the communications device in the method embodiment in FIG. 2. To avoid repetition, details are not described herein again. In addition, the TBS determining method can be applied to more application scenarios.

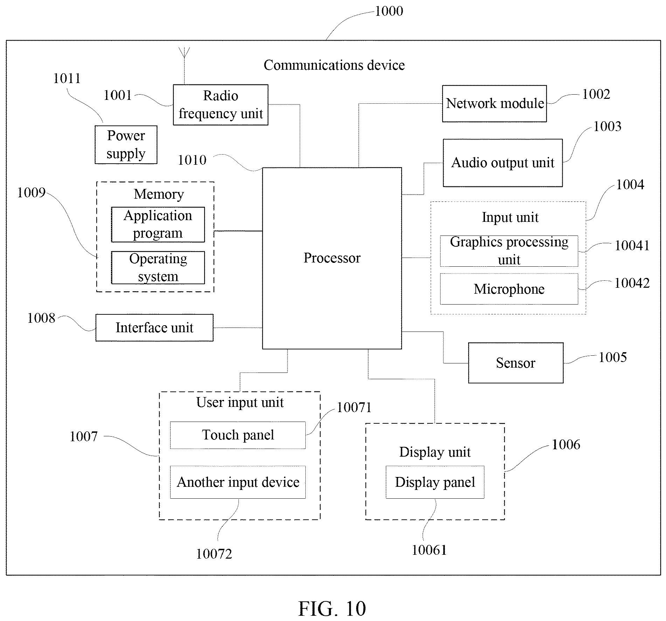

FIG. 10 is a schematic diagram of a hardware structure of a communications device for implementing the embodiments of the present disclosure. The communications device may be a terminal or a network device.

A communications device 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, a processor 1010, and a power supply 1011. It can be understood by persons skilled in the art that, the structure of the communications device shown in FIG. 10 does not constitute any limitation on the communications device, and the communications device may include more or fewer components than those shown in the figure, or combine some components, or have different component arrangements.

The processor 1010 is configured to: determine a duration of a first transmission in N nominal transmissions, where the first transmission is an actual transmission corresponding to a first nominal transmission or a second nominal transmission, and N is an integer greater than or equal to 1; and
determine a TBS based on PRBs within the duration.

Optionally, the radio frequency unit 1001 is configured to perform a repetitive transmission based on the TBS.

Optionally, in the N nominal transmissions, a nominal transmission that does not span a slot boundary is one actual transmission, and a nominal transmission that spans the slot boundary is divided into a plurality of actual transmissions; or
in the N nominal transmissions, a nominal transmission that does not span an uplink-downlink switching point is one actual transmission, and a nominal transmission that spans the uplink-downlink switching point is divided into a plurality of actual transmission; or
in the N nominal transmissions, a nominal transmission that does not span symbols with conflicting transmission directions is one actual transmission, and a nominal transmission that spans the symbols with the conflicting transmission directions is divided into a plurality of actual transmissions.

Optionally, the N nominal transmissions are N transmission opportunities determined based on a first message.

Optionally, the first nominal transmission is:
a nominal transmission that is first performed in the N nominal transmissions; or
a nominal transmission that first indicates a first redundancy version RV in the N nominal transmissions; or
a nominal transmission that is not divided in the N nominal transmissions.

Optionally, the N nominal transmissions include a first actual transmission, and the first actual transmission is one actual transmission of a divided nominal transmission or a set of a plurality of actual transmissions of a divided nominal transmission.

Optionally, the actual transmission corresponding to the second nominal transmission is:
a set of a plurality of actual transmissions obtained by dividing the second nominal transmission; or
an actual transmission with most symbols in a plurality of actual transmissions obtained by dividing the second nominal transmission; or
an actual transmission with most symbols in a plurality of actual transmissions obtained by dividing the second nominal transmission.

Optionally, the second nominal transmission is:
a nominal transmission that is divided into most actual transmissions in the N nominal transmissions; or
a set of divided nominal transmissions in the N nominal transmissions.

Optionally, in a case that the actual transmission corresponding to the second nominal transmission is the set of the plurality of actual transmissions, one transport block TB is transmitted in the set of the plurality of actual transmissions; or
in a case that the actual transmission corresponding to the second nominal transmission is the actual transmission with most symbols in the plurality of actual transmissions, one TB is transmitted in each actual transmission; or
in a case that the actual transmission corresponding to the second nominal transmission is the actual transmission with least symbols in the plurality of actual transmissions, one TB is transmitted in each actual transmission.

Optionally, in a case that the N nominal transmissions span a slot boundary, an uplink-downlink switching point, or symbols with conflicting transmission directions, the actual transmission corresponding to the second nominal transmission is:
an actual transmission of the second nominal transmission in one time domain resource; or
a set of actual transmissions of the second nominal transmission in a plurality of time domain resources, where
the second nominal transmission is a set of the N nominal transmissions.

Optionally, in a case that the N nominal transmissions do not span the slot boundary, the uplink-downlink switching point, or the symbols with the conflicting transmission directions, the first nominal transmission is any one of the N nominal transmissions.

The foregoing communications device can enable the TBS determining method to be applied to more application scenarios.

It should be understood that, in some embodiments of the present disclosure, the radio frequency unit 1001 may be configured to receive and send information or a signal in a call process. Specifically, after receiving downlink data from a base station, the radio frequency unit 1001 sends the downlink data to the processor 1010 for processing. In addition, the radio frequency unit 1001 sends uplink data to the base station. Generally, the radio frequency unit 1001 includes but is not limited to an antenna, at least one amplifier, a transceiver, a coupler, a low noise amplifier, and a duplexer. In addition, the radio frequency unit 1001 may communicate with a network and another device through a wireless communication system.

The communications device provides wireless broadband Internet access for a user by using the network module 1002, for example, help the user transmit and receive an e-mail, browse a website, and access stream media.

The audio output unit 1003 may convert, into an audio signal, audio data received by the radio frequency unit 1001 or the network module 1002 or stored in the memory 1009, and output the audio signal as sound. In addition, the audio output unit 1003 may further provide an audio output (for example, a call signal received voice, or a message received voice) related to a specific function implemented by the communications device 1000. The audio output unit 1003 includes a speaker, a buzzer, a telephone receiver, and the like.

The input unit 1004 is configured to receive an audio signal or a video signal. The input unit 1004 may include a graphics processing unit (GPU) 10041 and a microphone 10042. The graphics processing unit 10041 processes image data of a static image or video obtained by an image capture apparatus (such as, a camera) in a video capture mode or an image capture mode. A processed image frame may be displayed on the display unit 1006. The image frame processed by the graphics processing unit 10041 may be stored in the memory 1009 (or another storage medium) or sent by using the radio frequency unit 1001 or the network module 1002. The microphone 10042 may receive a sound and can process such sound into audio data. The processed audio data may be converted in a telephone call mode into a format that can be sent by the radio frequency unit 1001 to a mobile communications base station for output.

The communications device 1000 further includes at least one sensor 1005, such as an optical sensor, a motion sensor, and other sensors. Specifically, the optical sensor includes an ambient light sensor and a proximity sensor. The ambient light sensor may adjust luminance of the display panel 10061 based on brightness of ambient light, and the proximity sensor may disable the display panel 10061 and/or back light when the communications device 1000 approaches an ear. As a type of the motion sensor, an accelerometer sensor may detect an acceleration value in each direction (generally, three axes), and detect a value and a direction of gravity when the accelerometer sensor is static, and may be used in an application for recognizing a posture of the communications device (such as screen switching between landscape and portrait modes, a related game, or magnetometer posture calibration), a function related to vibration recognition (such as a pedometer or a knock), and the like. The sensor 1005 may further include a fingerprint sensor, a pressure sensor, an iris sensor, a molecular sensor, a gyroscope, a barometer, a hygrometer, a thermometer, an infrared sensor, and the like. Details are not described herein.

The display unit 1006 is configured to display information entered by a user or information provided for a user. The display unit 1006 may include a display panel 10061, and the display panel 10061 may be configured in a form of a liquid crystal display (Liquid Crystal Display, LCD), an organic light-emitting diode (Organic Light-Emitting Diode, OLED), or the like.

The input unit 1007 may be configured to receive input numeral or character information, and generate key signal input related to user setting and function control that are of the communications device. Specifically, the user input unit 1007 includes a touch panel 10071 and another input device 10072. The touch panel 10071 is also referred to as a touchscreen, and may collect a touch operation performed by a user on or near the touch panel 10071 (such as an operation performed by a user on the touch panel 10071 or near the touch panel 10071 by using any proper object or accessory, such as a finger or a stylus). The touch panel 10071 may include two parts: a touch detection apparatus and a touch controller. The touch detection apparatus detects a touch position of the user, detects a signal brought by the touch operation, and sends the signal to the touch controller. The touch controller receives touch information from the touch detection apparatus, converts the touch information into touch point coordinates, and sends the touch point coordinates to the processor 1010, and can receive and execute a command sent by the processor 1010. In addition, the touch panel 10071 may be of a resistive type, a capacitive type, an infrared type, a surface acoustic wave type, or the like. The user input unit 1007 may include the another input device 10072 in addition to the touch panel 10071. Specifically, the another input device 10072 may include but is not limited to a physical keyboard, a functional button (such as a volume control button or a power on/off button), a trackball, a mouse, and a joystick. Details are not described herein.

Further, the touch panel 10071 may cover the display panel 10061. When detecting the touch operation on or near the touch panel 10071, the touch panel 10071 transmits the touch operation to the processor 1010 to determine a type of a touch event, and then the processor 1010 provides corresponding visual output on the display panel 10061 based on the type of the touch event. In FIG. 10, although the touch panel 10071 and the display panel 10061 are used as two independent parts to implement input and output functions of the communications device, in some embodiments, the touch panel 10071 and the display panel 10061 may be integrated to implement the input and output functions of the communications device. This is not specifically limited herein.

The interface unit 1008 is an interface for connecting an external apparatus and the communications device 1000. For example, the external apparatus may include a wired or wireless headphone port, an external power supply (or a battery charger) port, a wired or wireless data port, a storage card port, a port used to connect to an apparatus having an identity module, an audio input/output (I/O) port, a video I/O port, and a headset port. The interface unit 1008 may be configured to receive input (for example, data information and power) from an external apparatus and transmit the received input to one or more elements in the communications device 1000 or may be configured to transmit data between the communications device 1000 and an external apparatus.

The memory 1009 may be configured to store a software program and various data. The memory 1009 may mainly include a program storage area and a data storage area. The program storage area may store an operating system, an application program required by at least one function (such as a voice playing function and an image playing function), and the like, and the data storage area may store data (such as audio data and a phone book) created based on use of the mobile phone, and the like. In addition, the memory 1009 may include a high-speed random access memory, and may further include a nonvolatile memory, for example, at least one magnetic disk storage device, a flash storage device, or another volatile solid-state storage device.

The processor 1010 is a control center of the communications device, is connected to all parts of the entire communications device by using various interfaces and lines, and executes various functions of the communications device and processes data by running or executing the software program and/or the module stored in the memory 1009 and by invoking data stored in the memory 1009, so as to perform overall monitoring on the communications device. The processor 1010 may include one or more processing units. Optionally, an application processor and a modem processor may be integrated into the processor 1010. The application processor mainly processes an operating system, a user interface, an application program, and the like. The modem processor mainly processes wireless communications. It can be understood that, alternatively, the modem processor may not be integrated into the processor 1010.

The communications device 1000 may further include the power supply 1011 (such as a battery) that supplies power to all the components. Optionally, the power supply 1011 may be logically connected to the processor 1010 by using a power management system, to implement functions such as charging and discharging management and power consumption management by using the power management system.

In addition, the communications device 1000 includes some function modules not shown, and details are not described herein.

Optionally, some embodiments of the present disclosure further provide a communications device, including a processor 1010, a memory 1009, and a computer program that is stored in the memory 1009 and that executable on the processor 1010. When the computer program is executed by the processor 1010, the foregoing processes of the TBS determining method embodiment are implemented and a same technical effect can be achieved. To avoid repetition, details are not described herein again.

Some embodiments of the present disclosure further provide a computer-readable storage medium. The computer-readable storage medium stores a computer program, and when the computer program is executed by a processor, the processes of the TBS determining method embodiment provided in some embodiments of the present disclosure are implemented and a same technical effect can be achieved. To avoid repetition, details are not described herein again. The computer-readable storage medium is, for example, a read-only memory (Read-Only Memory, ROM for short), a random access memory (Random Access Memory, RAM for short), a magnetic disk, or an optical disc.

It can be understood that the embodiments described in the embodiments of the present disclosure may be implemented by hardware, software, firmware, middleware, microcode, or a combination thereof. For implementation with hardware, the module, unit, submodule, subunit, and the like may be implemented in one or more application specific integrated circuits (Application Specific Integrated Circuit, ASIC), a digital signal processor (Digital Signal Processing, DSP), a digital signal processing device (DSP Device, DSPD), a programmable logic device (Programmable Logic Device, PLD), a field-programmable gate array (Field-Programmable Gate Array, FPGA), a general-purpose processor, a controller, a microcontroller, a microprocessor, another electronic unit for implementing the functions of the present disclosure, or a combination thereof.

For implementation by software, technologies described in the embodiments of the present disclosure may be implemented by executing functional modules (for example, a process and a function) in the embodiments of the present disclosure. Software code may be stored in a memory and executed by a processor. The memory can be implemented inside or outside the processor.

Therefore, the objective of the present disclosure may also be implemented by running a program or a group of programs on any computing apparatus. The computing apparatus may be a well-known general-purpose apparatus. Therefore, the objective of the present disclosure may also be implemented by providing only a program product that includes program code for implementing the method or apparatus. In other words, such a program product also constitutes the present disclosure, and a storage medium storing such a program product also constitutes the present disclosure. Obviously, the storage medium may be any well-known storage medium or any storage medium to be developed in the future. It should also be noted that in the apparatus and method of the present disclosure, it is obvious that each component or step may be decomposed and/or recombined. These decomposition and/or recombination should be regarded as an equivalent solution of the present disclosure. Moreover, the steps for performing the foregoing series of processing may be performed naturally in a chronological order according to a described sequence, but do not necessarily need to be performed in the chronological order, and some steps may be performed in parallel or independently.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of the present disclosure essentially or the part contributing to the prior art may be implemented in a form of a software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of the present disclosure.

The embodiments of the present disclosure are described above with reference to the accompanying drawings, but the present disclosure is not limited to the foregoing specific implementations. The foregoing specific implementations are merely examples instead of restriction. Under enlightenment of the present disclosure, a person of ordinary skills in the art may make many forms without departing from the aims of the present disclosure and the protection scope of claims, all of which fall within the protection of the present disclosure.

## Claims

1. A transport block size determining method, comprising:
determining a duration of a first transmission in N nominal transmissions, wherein the first transmission is an actual transmission corresponding to a first nominal transmission or a second nominal transmission, and N is an integer greater than or equal to 1; and
determining a transport block size TBS based on physical resource blocks PRBs within the duration.

2. The method according to claim 1, wherein the method further comprises:
performing a repetitive transmission based on the TBS.

3. The method according to claim 1, wherein in the N nominal transmissions, a nominal transmission that does not span a slot boundary is one actual transmission, and a nominal transmission that spans the slot boundary is divided into a plurality of actual transmissions; or
in the N nominal transmissions, a nominal transmission that does not span an uplink-downlink switching point is one actual transmission, and a nominal transmission that spans the uplink-downlink switching point is divided into a plurality of actual transmission; or
in the N nominal transmissions, a nominal transmission that does not span symbols with conflicting transmission directions is one actual transmission, and a nominal transmission that spans the symbols with the conflicting transmission directions is divided into a plurality of actual transmissions.

4. The method according to claim 1, wherein the N nominal transmissions are N transmission opportunities determined based on a first message.

5. The method according to claim 1, wherein the first nominal transmission is:
a nominal transmission that is first performed in the N nominal transmissions;
a nominal transmission that first indicates a first redundancy version RV in the N nominal transmissions; or
a nominal transmission that is not divided in the N nominal transmissions.

6. The method according to claim 5, wherein the N nominal transmissions comprise a first actual transmission, and the first actual transmission is one actual transmission of a divided nominal transmission or a set of a plurality of actual transmissions of a divided nominal transmission.

7. The method according to claim 1, wherein the actual transmission corresponding to the second nominal transmission is:
a set of a plurality of actual transmissions obtained by dividing the second nominal transmission;
an actual transmission with most symbols in a plurality of actual transmissions obtained by dividing the second nominal transmission; or
an actual transmission with least symbols in a plurality of actual transmissions obtained by dividing the second nominal transmission.

8. The method according to claim 7, wherein the second nominal transmission is:
a nominal transmission that is divided into most actual transmissions in the N nominal transmissions; or
a set of divided nominal transmissions in the N nominal transmissions.

9. The method according to claim 7, wherein in a case that the actual transmission corresponding to the second nominal transmission is the set of the plurality of actual transmissions, one transport block TB is transmitted in the set of the plurality of actual transmissions; or
in a case that the actual transmission corresponding to the second nominal transmission is the actual transmission with most symbols in the plurality of actual transmissions, one TB is transmitted in each actual transmission; or
in a case that the actual transmission corresponding to the second nominal transmission is the actual transmission with least symbols in the plurality of actual transmissions, one TB is transmitted in each actual transmission.

10. The method according to claim 1, wherein in a case that the N nominal transmissions span a slot boundary, an uplink-downlink switching point, or symbols with conflicting transmission directions, the actual transmission corresponding to the second nominal transmission is:
an actual transmission of the second nominal transmission in one time domain resource; or
a set of actual transmissions of the second nominal transmission in a plurality of time domain resources, wherein
the second nominal transmission is a set of the N nominal transmissions.

11. The method according to claim 10, wherein in a case that the N nominal transmissions do not span the slot boundary, the uplink-downlink switching point, or the symbols with the conflicting transmission directions, the first nominal transmission is any one of the N nominal transmissions.

12. A communications device, wherein the communications device is a terminal or a network device, comprising:
a first determining module, configured to determine a duration of a first transmission in N nominal transmissions, wherein the first transmission is an actual transmission corresponding to a first nominal transmission or a second nominal transmission, and N is an integer greater than or equal to 1; and
a second determining module, configured to determine a TBS based on PRBs within the duration.

13. A communications device, wherein the communications device is a terminal, comprising a memory, a processor, and a program that is stored in the memory and that is executable on the processor, wherein when the program is executed by the processor, steps of the TBS determining method according to any one of claims 1 to 11 are implemented.

14. A communications device, wherein the communications device is a network device, comprising a memory, a processor, and a program that is stored in the memory and that is executable on the processor, wherein when the program is executed by the processor, steps of the TBS determining method according to any one of claims 1 to 11 are implemented.

15. A computer-readable storage medium, wherein the computer-readable storage medium stores a computer program, and when the computer program is executed by a processor, steps of the TBS determining method according to any one of claims 1 to 11 are implemented.
